# EUROPEAN PATENT SPECIFICATION

(11) **EP 2 479 042 B1**
(45) Date of publication and mention of the grant of the patent: **04.05.2016**
(21) Application number: 11075180.7
(22) Date of filing: 29.07.2011
(51) Int. Cl.: B60B 21/02, A61G 5/02

(54) **Tire rim**
Radfelge
Pneu-jante

(30) Priority: 25.01.2011 EP 11075011
(43) Date of publication of application: 25.07.2012
(73) Proprietor: BobErgo, 2516 BE The Hague (NL)
(72) Inventor: Schaaper, Martijn, NL- 2681 PC Monster (NL)
(74) Representative: V.O.

(56) References cited:
- DE-U1- 20 104 394
- FR-A1- 2 200 122
- JP-A- 9 193 602
- JP-A- 2002 234 306
- US-A- 5 620 235

## Description

This invention relates to a tire rim for use in spoked wheels, which are mounted to wheelchairs or tricycles with a camber.

Spoked wheels mounted to wheelchairs or tricycles with a camber are known. Document DE 20104394 U discloses such a wheel. For the use in sports like for example wheelchair basketball, the wheelchair is propelled by the seated occupant turning the rear wheels by hand and the rear wheels are mounted at an angle between 3 and 25 degrees with normal. The camber enhances the stability, improves the pivot speed and protects the hands during collision with another wheelchair.

Spoked wheels, with a size also used for bicycles, are preferred by wheelchair athletes, because these wheels are light and strong. Spoked wheels can resist high impact, especially when athletes use a boxing technique to move forward.

It is an object of the invention to provide a tire rim for spoked wheels that improves the performance of the wheels when mounted to a human powered rolling apparatus with a camber.

It was observed that self-propelled wheelchairs with wheels mounted with a negative camber have higher rolling friction than wheelchairs with wheels mounted perpendicular to the floor. The asymmetrical force on the tire of the wheel in the inclined position results in particular side-way deformation of the tire and consequently extra loss of energy.

When a regular wheel, comprising a regular symmetrical tire rim with a first shoulder and a second shoulder supporting a regular symmetrical tire with a first side wall and a second side wall, is mounted perpendicular to the floor, the tire is supported opposite to the floor. The position of the support area between the two shoulders of the tire rim is in the middle above the contact patch, where the tread of the tire is in contact with the floor. Furthermore, both shoulders of the tire rim have the same distance to the floor and the first shoulder supports the first side wall of the tire the same as the second shoulder supports the second side wall of the tire.

When this regular wheel is mounted with a camber the tire rim is not supporting the tire as opposite to the floor as when the regular wheel is mounted perpendicular to the floor. The support area between the two shoulders of the tire rim has been dislocated and rotated by turning the regular wheel to the inclined position of the camber. The dislocated position of the support area between the two shoulders of the tire rim is not anymore in the middle above the contact patch. Furthermore, the rotated position of the support area, with the first shoulder having a larger distance to the floor than the second shoulder, provides a different support of the first shoulder for the first side wall than of the second shoulder for the second side wall. The restrains of the first shoulder are too little, providing for the first side wall of the tire to deform outward and the restrains of the second shoulder are too strong, providing for the second side wall of the tire to prevent deformation outward. The particular restrains on the tire by the tire rim and the asymmetrical force at the contact path provide for a support not opposite to the floor and for particular side-way deformation of the tire.

Thereto, the invention provides a wheel chair tire rim for a human powered rolling apparatus according to claim 1.

By having the first diameter of the first shoulder larger than the second diameter of the second shoulder the restrains of the tire at the first shoulder will be different than the restrains of the tire at the second shoulder. By mounting a wheel, comprising the tire rim according to the invention, with a camber, wherein the first and second shoulder have a substantially similar distance to the floor, the position of the support area between the first shoulder and the second shoulder is substantially in the middle above the contact patch. Furthermore, the restrains of the first shoulder and the second shoulder on the tire are balanced to provide for less side-way deformation. Therefore the tire is supported by the tire rim substantially more opposite to the floor.

In particular embodiments of the invention the tire rim may have specific dimensions that provide particular advantages for wheels for a human powered rolling apparatus. Wheels for a human powered rolling apparatus, like bicycles, tricycles and wheelchairs, regularly have different dimensions than wheels for a motor powered rolling apparatus, like automobiles and motorcycles. Wheels for a human powered rolling apparatus mostly have a relatively large diameter for a good transmission combined with a relatively narrow tire rim for low weight and low friction. A tire rim, wherein the first and second diameter is between 400 mm and 660 mm and the distance between the first and second shoulder is between 18 mm and 54 mm are most advantageous for wheels for a human powered rolling apparatus.

The tire rim can be made from any desired material regularly in use for making tire rims. Particular embodiments of the invention, however, advantageously, may use metal for the tire rim. The material is strong and tough, and ultimately suitable for making arrangements for connecting spoke elements. Furthermore, in particular embodiments of the invention the metal may be aluminum and optionally the rim may be manufactured using extrusion. Each of these details provides particular advantages and can be implemented independently of the other.

In particular embodiments the tire rim may have an integrated pushrim, which may be advantageous when used in a wheel for a wheelchair.

The invention also comprises a wheel chair wheel made of a tire rim discussed above and laid down in the appended claims. This wheel may comprise a standard tire, like a tubular tire.

The invention further comprises a wheel chair tire for a wheel chair tire rim as discussed above, comprising a first bead, a first side wall, a tread, a second side wall and a second bead, and the length of the first side wall is substantially equal to the length of the second side wall, wherein the first bead has a larger circumferential diameter than the second bead.

In particular embodiment of the invention the tire advantageously is used in combination with a tire rim according to the invention. The tire may be supported by the tire rim in an advantageous way according to the invention. Furthermore, the tread of the tire will wear in the middle.

The invention further comprises a human powered rolling apparatus with a wheel discussed above and laid down in the appended claims. In particular embodiments of the invention this rolling apparatus may have a wheel with its center line mounted at any angle to the floor other than parallel to the floor. Between three degrees and twenty five degrees have proven to be the most advantageous, however.

Further advantageous embodiments are in the dependent claims.

With reference to the exemplary embodiments shown in the drawings the invention will now be specified, although only by way of example. In the drawings:
Fig. 1 shows a front view of a wheelchair with wheels with a center line mounted with a camber at an angle to the floor.
Fig. 2 shows a side view of a wheelchair.
Fig. 3 shows a cross section of a first embodiment of the tire rim according to the invention.
Fig. 4 shows a cross section of a second embodiment of the tire rim according to the invention.
Fig. 5 shows a cross section of an embodiment of a wheel with a tire rim according to the invention.
Fig. 6 shows a partial side view of a further embodiment of the tire rim according to the invention with a spoke element.
Fig. 7 shows a cross section of Fig. 6.
Fig. 8 shows a cross section of an embodiment of the tire rim with integrated pushrim according to the invention.
Fig. 9 shows a cross section of a further embodiment of the tire rim according to the invention with a standard tire.
Fig. 10 shows a cross section of a further embodiment of the tire rim according to the invention and an embodiment of a tire according to the invention

It is noted that the drawings are only diagrammatic and schematic representations of exemplary embodiments of the invention. The embodiments are given by way of non-limiting examples. In the figures, the same or corresponding parts are represented with the same reference numerals.

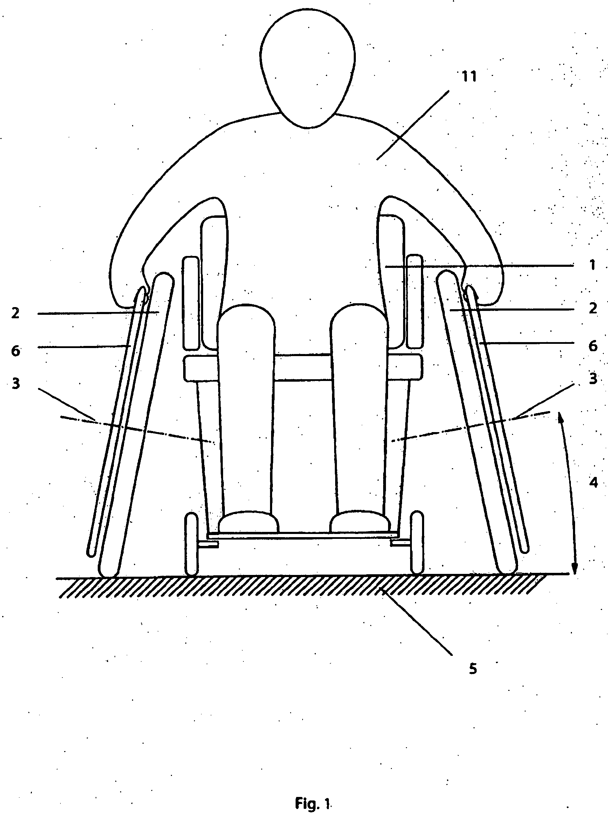

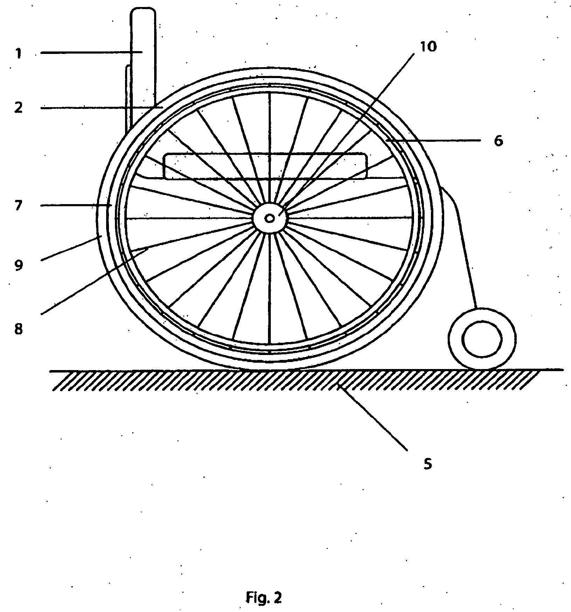

Fig. 1 and 2 show a wheelchair 1 comprising wheels 2 with its center line 3 mounted with a camber at an angle 4 to the floor 5. The wheel 2 comprises a tire rim 7, spoke elements 8, a tire 9 and a hub 10. The spoke. elements 8 may be compression spokes or tension spokes. Advantageously tension spokes are used consisting of elongated rigid steel wire elements arranged for connecting to the tire rim 7 and the hub 10. Alternatively, tension spokes may also consist of bendable wire elements or chains.

The wheel 2 further comprises a pushrim 6 to manually propel the wheelchair 1 by the person 11 sitting in the wheelchair 1.

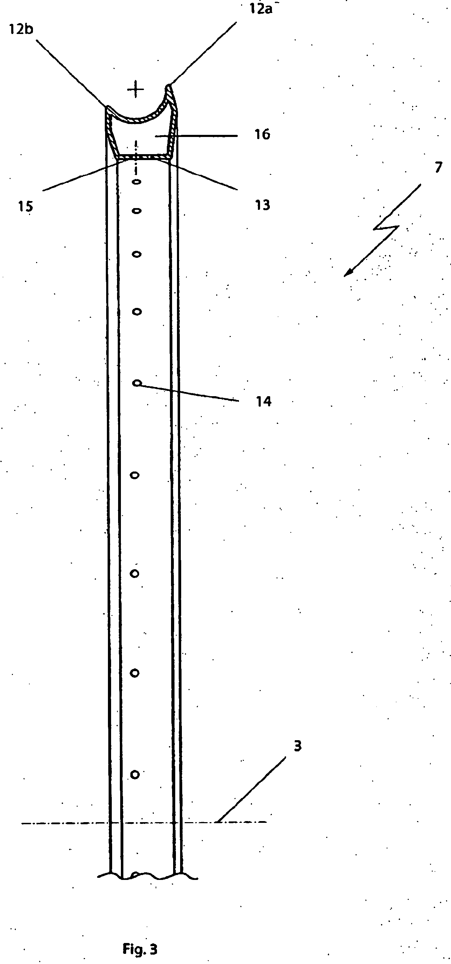

Fig. 3 shows a cross section of a first embodiment of the tire rim according to the invention. The tire rim 7 comprises shoulders 12a and 12b and a main body 13 arranged for connecting spoke elements by means of holes 14. In this particular embodiment the tire rim may be aluminum and manufactured by extrusion to first form a hollow, non-symmetrical, aluminum extrusion profile with a cavity 16. Secondly, the extrusion profile may, advantageously, be rolled over reference surface 15 of main body 13 to bend an open ring. Finally, the ring may be closed by using a regular connection technique, like for example welding, gluing or screwing, to obtain a tire rim according to the invention. The shoulder 12a of the tire rim 7 has a larger circumferential diameter measured than the shoulder 12b of the tire rim 7.

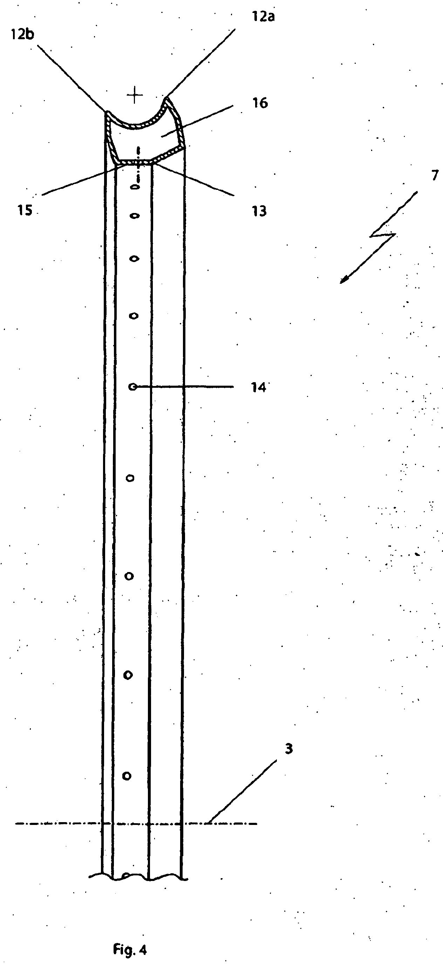

A second embodiment of the invention is shown in Fig. 4. This particular embodiment comprises a tire rim with a similar hollow extrusion profile with a cavity 16. Alternatively, the extrusion profile of this embodiment of the invention advantageously has a symmetrical cross section. The extrusion profile may be rolled over reference surface 15 of main body 13 to manufacture a tire rim according to the invention. Holes 14 provide for an arrangement to connect spoke elements.

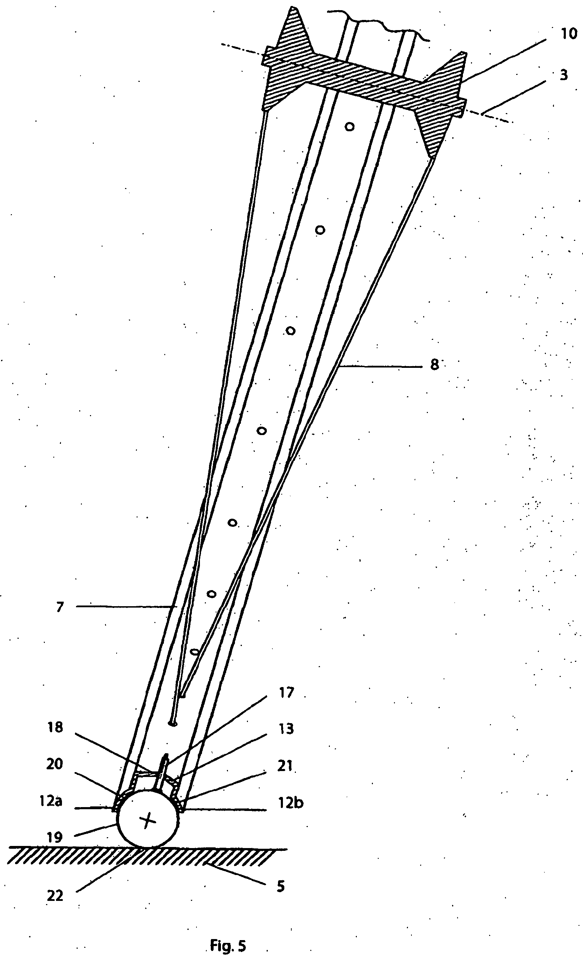

Fig. 5 shows a cross section of an embodiment of a wheel with a tire rim according to the invention. In this example the tire rim 7 comprises shoulders 12a and 12b and a main body 13. In this particular embodiment the tire rim may be shaped of steel strip by means of roll forming. Surfaces 20 and 21 are shaped in a particular way to support a standard tubular tire 19. Hole 18 provides for a passage for the tire valve 17 of the tubular tire 19.

The wheel is positioned with a camber in such a way that the distance between shoulder 12a and the floor 5 is substantially similar to the distance between shoulder 12b and the floor 5. The area of the tire rim between 12a to 12b may support the tire more equally divided above the contact patch 22. Contact patch 22 may be substantially in the middle below the area between 12a and 12b and supporting the tire substantially more opposite to the floor.

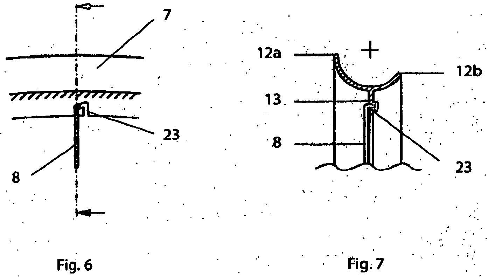

Fig. 6 and 7 show a further embodiment of a tire rim 7 with different sized shoulders 12a and 12b according to the invention which may be titanium and manufactured by extrusion. The illustrations show a non-hollow, non-symmetrical extrusion profile that may be shaped to a tire rim according to the invention. Main body 13 is provided with slots 23 to connect spoke elements 8.

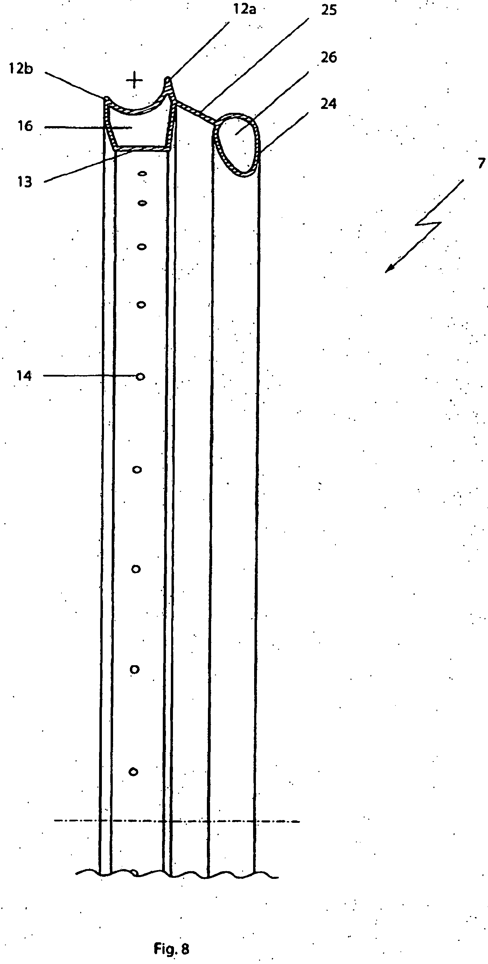

In Fig. 8 is a further embodiment of the invention shown. A tire rim with an integrated pushrim advantageously made in a single extrusion process. The extrusion profile has two hollow bodies 13 and 24 with cavities 16 and 26 connected with a bridging section 25. Main body 13 has unequal shoulders 12a and 12b and arrangements 14 for connecting spoke elements. Body 24 is integrally fixed to main body 13 with-bridging section 25. Body 24 provides for an ergonomically shaped pushrim that is an integral part of tire rim 7.

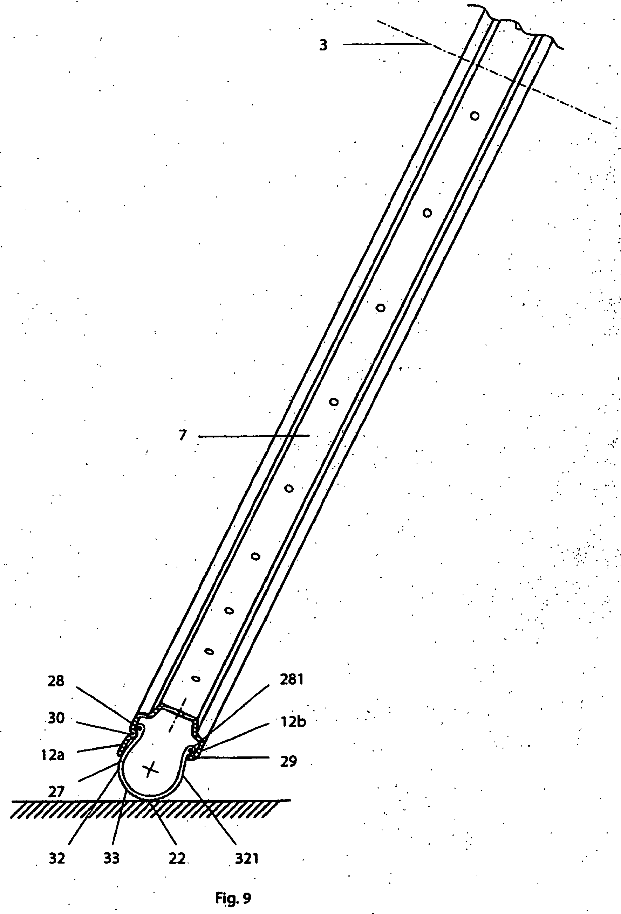

Fig. 9 depicts another embodiment of the tire rim 7 according to the invention. The tire rim 7 provides for shoulders 12a and 12b. The tire rim is designed to support a standard tire 27 with steel or Kevlar reinforced beads 28 and 281, side walls 32 and 321 and tread.33. The tread may be a distinct rough area with grooves or a nondescript smooth and slick area to provide at appropriate level of traction that does not wear away too quickly. The standard tire may be hold in place by support 29 on shoulder 12b and support 30 on shoulder 12a. Because the circumferential diameter of the beads 28 and 281 of the standard tire 27 are equal, the distance between support 29 and center line 3 is substantially equal to the distance between support 30 and center line 3. Support 29 may be the end of shoulder 12b and shoulder 12a may be extended beyond support 30 to provide a support of the tire more equally divided above the contact patch 22. When using a standard tire 27 with side wall 28 equal to side wall 281 the contact patch 22 will not be in the middle of tread 33.

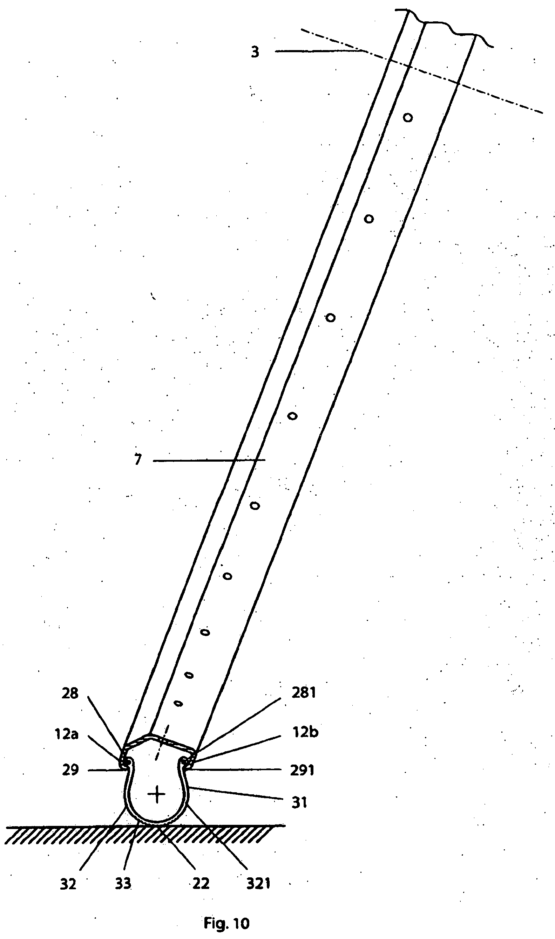

Fig. 10 depicts an alternative embodiment of tire rim 7 according to the invention and an embodiment of a tire 31 according to the invention. Tire rim 7 comprises of a centerline 3, shoulders 12a and 12b, supports 29 and 291. Alternative to the previous embodiment, the distance between support 29 and center line 3 is different from the distance between support 291 and center line 3. In this particular embodiment according to the invention, the support 29 is the end of shoulder 12a and the support 291 is the end of shoulder 12b. This embodiment is particularly suitable to be mounted with a tire 31 according to the invention.

Tire 31 comprising a first bead 28, a first side wall 32, a tread 33; a second side wall 321 and a second bead 281. The width of the first side wall 32 is substantially equal to the width of the second side wall 321, wherein the first bead 28 has a larger circumferential diameter than the second bead 281.

In accordance with an advantageous feature of the invention and as can be seen in Fig. 10, tire 31 illustratively may be mounted to tire rim 7 in a way that bead 28 is supported by support 29 and bead 281 is supported by support 291. A wheel comprising a tire 31 and tire rim 7 mounted with a camber as illustrated may have a contact patch 22 significantly more in the middle of tread 33, while the tire rim may provide support substantially equally divided above contact patch 22.

Many variants will be clear to the person skilled in the art. For example, although the illustrated embodiments of the tire rim have cross sections of equal wall thickness, it may be possible to have variable wall thickness for optimal design. Also, arrangements for connecting spoke elements may be screw joints or hooks. All variants are understood to fall within the scope of the invention as set forth in the appended claims.

## Claims

1. Wheel chair tire rim (7) for human powered rolling apparatus (1) having wheel chair wheels (2) mounted with the center line at an angle to the floor, **characterised in that** it comprises a first shoulder (12a) having a first diameter, a second shoulder (12b) having a second diameter, and a main body (13) arranged for connecting spoke elements, wherein the first diameter is larger than the second diameter.

2. Wheel chair tire rim (7) according to claim 1, wherein the first and second diameter are between 400 mm and the distance between the first and second shoulder is between 189 mm and 54 mm.

3. Wheel chair tire rim (7) according to claim 1 or 2, wherein the tire rim (7) is made of metal.

4. Wheel chair tire rim (7) according to any one of the preceding claims, wherein the tire rim (7) is made of aluminum.

5. Wheel chair tire rim (7) according to any one of the preceding claims, wherein the tire rim (7) is made by extrusion.

6. Wheel chair tire rim (7) according to any of the preceding claims, wherein the tire rim has an integrated pushrim.

7. Wheel chair wheel (2) having a center-line comprising a tire rim (7) in accordance with claim 1.

8. Wheel chair wheel (2) according to claim 7, wherein the wheel chair wheel (2) has a tubular tire (19).

9. Human powered rolling apparatus (1) having a wheel chair wheel in accordance with claim 7 or 8, wherein a least one wheel chair wheel (2) is mounted with the center line at an angle to the floor.

10. Human powered rolling apparatus according to claim 9, wherein the angle is between 3 and 25 degrees.

11. Rolling apparatus according to claim 9-10, wherein the human powered rolling apparatus (2) is a wheelchair.

12. Wheel chair tire (31) for a wheel chair tire rim (7) according to any of claims 1-6 comprising a first bead (28), a first side wall (32), a tread, a second 5 side wall (321) and a second bead (281), and the width of the first side wall (32) is substantially equal to the width of the second side wall (321), **characterised in that** the first bead (28) has a larger circumferential diameter than the second bead (281).

## Patentansprüche

1. Rollstuhl-Radfelge (7) für eine menschlich angetriebene Rollvorrichtung (1) mit Rollstuhlrädern (2), montiert mit der Mittellinie in einem Winkel zum Boden, **dadurch gekennzeichnet, dass** sie eine erste Schulter (12a) mit einem ersten Durchmesser, eine zweite Schulter (12b) mit einem zweiten Durchmesser und einen Hauptkörper (13), angeordnet zum Verbinden von Speichenelementen, umfasst, wobei der erste Durchmesser größer als der zweite Durchmesser ist.

2. Rollstuhl-Radfelge (7) nach Anspruch 1, wobei der erste und der zweite Durchmesser zwischen 400 mm sind und der Abstand zwischen der ersten und der zweiten Schulter zwischen 189 mm und 54 mm ist.

3. Rollstuhl-Radfelge (7) nach Anspruch 1 oder 2, wobei die Radfelge (7) aus Metall hergestellt ist.

4. Rollstuhl-Radfelge (7) nach einem der vorhergehenden Ansprüche, wobei die Radfelge (7) aus Aluminium hergestellt ist.

5. Rollstuhl-Radfelge (7) nach einem der vorhergehenden Ansprüche, wobei die Radfelge (7) im Strangpressverfahren hergestellt ist.

6. Rollstuhl-Radfelge (7) nach einem der vorhergehenden Ansprüche, wobei die Radfelge einen integrierten Schieberand hat.

7. Rollstuhlrad (2) mit einer Mittellinie, umfassend eine Radfelge (7) nach Anspruch 1.

8. Rollstuhlrad (2) nach Anspruch 7, wobei das Rollstuhlrad (2) einen schlauchartigen Reifen (19) hat.

9. Menschlich angetriebene Rollvorrichtung (1) mit einem Rollstuhlrad nach Anspruch 7 oder 8, wobei mindestens ein Rollstuhlrad (2) mit der Mittellinie in einem Winkel zum Boden montiert ist.

10. Menschlich angetriebene Rollvorrichtung nach Anspruch 9, wobei der Winkel zwischen 3 und 25 Grad ist.

11. Rollvorrichtung nach Anspruch 9-10, wobei die menschlich angetriebene Rollvorrichtung (2) ein Rollstuhl ist.

12. Rollstuhlreifen (31) für eine Rollstuhl-Radfelge (7) nach einem der Ansprüche 1-6, umfassend einen ersten Wulstrand (28), eine erste Seitenwand (32), einen Strang, eine zweite Seitenwand (321) und einen zweiten Wulstrand (281), wobei die Breite der ersten Seitenwand (32) im Wesentlichen gleich der Breite der zweiten Seitenwand (321) ist, **dadurch gekennzeichnet, dass** der erste Wulstrand (28) einen größeren Umfangsdurchmesser hat als der zweite Wulstrand (281).

## Revendications

1. Jante de pneumatique (7) de fauteuil roulant pour appareil roulant actionné par un être humain (1) ayant des roues de fauteuil roulant (2) montées ayant l'axe central faisant un angle par rapport au sol, **caractérisée en ce qu'**elle comporte un premier épaulement (12a) ayant un premier diamètre, un second épaulement (12b) ayant un second diamètre et un corps principal (13) agencé pour relier des éléments de rayon, dans laquelle le premier diamètre est plus grand que le second diamètre.

2. Jante de pneumatique (7) de fauteuil roulant selon la revendication 1, dans laquelle le premier et le second diamètre sont entre 400 mm et la distance entre le premier et le second épaulement est entre 189 mm et 54 mm.

3. Jante de pneumatique (7) de fauteuil roulant selon les revendications 1 ou 2, dans laquelle la jante de pneumatique (7) est constituée d'un métal.

4. Jante de pneumatique (7) de fauteuil roulant selon l'une quelconque des revendications précédentes, dans laquelle la jante de pneumatique (7) est constituée d'aluminium.

5. Jante de pneumatique (7) de fauteuil roulant selon l'une quelconque des revendications précédentes dans laquelle la jante de pneumatique (7) est réalisée par extrusion.

6. Jante de pneumatique (7) de fauteuil roulant selon l'une quelconque des revendications précédentes dans laquelle la jante de pneumatique comprend une jante de poussée intégrée.

7. Roue de fauteuil roulant (2) ayant un axe central comprenant une jante de pneumatique (7) selon la revendication 1.

8. Roue de fauteuil roulant (2) selon la revendication 7, dans laquelle la roue de fauteuil roulant (2) a un pneumatique tubulaire (19).

9. Appareil roulant actionné par un être humain (1) ayant une roue de fauteuil roulant selon les revendications 7 ou 8, dans lequel au moins une roue de fauteuil roulant (2) est montée ayant l'axe central faisant un angle par rapport au sol.

10. Appareil roulant actionné par un être humain (1) selon la revendication 9, dans lequel l'angle est compris entre 3 et 25 degrés.

11. Appareil roulant selon l'une quelconque des revendications 9 à 10, dans lequel l'appareil roulant actionné par un être humain (2) est un fauteuil roulant.

12. Pneumatique de fauteuil roulant (31) pour une jante de pneumatique (7) de fauteuil roulant selon l'une quelconque des revendications 1 à 6 comprenant un premier talon (28), une première paroi latérale (32), une bande de roulement, une seconde paroi latérale (321) et un second talon (281), et la largeur de la première paroi latérale (32) est sensiblement égale à la largeur de la seconde paroi latérale (321), **caractérisé en ce que** le premier talon (28) a un diamètre circonférentiel plus grand que le second talon (281).
